# EUROPEAN PATENT APPLICATION

(11) **EP 4 512 617 A1**
(43) Date of publication of application: **26.02.2025**
(21) Application number: 24186579.9
(22) Date of filing: 04.07.2024
(51) Int. Cl.: B32B 27/32, B32B 7/02, B32B 7/022, B32B 7/027, B32B 27/08, B32B 27/16

(54) **HIGH DENSITY POLYETHYLENE FILMS AND FLEXIBLE PACKAGING FILM COMPRISING THE SAME**

(30) Priority: 30.11.2023 KR 20230170987
(71) Applicant: Hanwha TotalEnergies Petrochemical Co., Ltd., Seosan-si, Chungcheongnam-do 31900 (KR)
(72) Inventor: JANG, Hee Jung, 31900 DAESAN-EUP, SEOSAN-SI (KR); HAN, Jae Hyuck, 31900 DAESAN-EUP, SEOSAN-SI (KR); PARK, Ji Yong, 31900 DAESAN-EUP, SEOSAN-SI (KR); HWANG, In Hyeok, 31900 DAESAN-EUP, SEOSAN-SI (KR); CHOI, Yeon Beom, 31900 DAESAN-EUP, SEOSAN-SI (KR)
(74) Representative: Cabinet Becker et Associés

(57) **Abstract**

Disclosed is a high-density polyethylene film including an intermediate layer containing a first high-density polyethylene resin, and a first skin layer and a second skin layer respectively disposed on both surfaces of the intermediate layer, the first skin layer and the second skin layer containing a second high-density polyethylene resin, wherein a density of the first high-density polyethylene resin is higher than a density of the second high-density polyethylene resin, and based on a result of crystallization analysis fractionation of a polymer solution of the second high-density polyethylene resin dissolved in a solvent, a concentration of a polymer dissolved in the polymer solution at a temperature of 80°C to 90°C is decreased by 30% to 75%, compared to a concentration of the polymer dissolved in the polymer solution at a temperature of 100°C.

## Description

### CROSS-REFERENCE TO THE RELATED APPLICATION

The present application claims priority to and the benefit of Korean Patent Application No. 10-2023-0170987, filed on November 30, 2023, in the Korean Intellectual Property Office, the entire disclosure of which is incorporated herein by reference.

### BACKGROUND

### 1. Field

Embodiments of the present disclosure relate to a high-density polyethylene film and a flexible packaging film including the same.

### 2. Description of the Related Art

Recently, regulations on recycling have been strengthened all around the world and companies are also making efforts to design flexible packaging materials capable of being easily collected, classified, and recycled due to the change in awareness of social responsibility for inherent sustainability and solutions to a wide range of environmental problems.

The most effective approach is to use packaging materials produced from a single material instead of conventional packaging produced from a mixture of a variety of materials. In particular, packaging materials produced from a single material such as polyethylene (PE) or polypropylene (PP) are easily recycled and contribute to improving the quality of recycled products.

For this purpose, the use of a biaxially oriented polyethylene (BOPE) film is required. Generally, when a tenter frame process is used as a process for preparing the biaxially oriented polyethylene (BOPE) film and the film is stretched in a machine direction (MD) and a transverse direction (TD), polyethylene chains and crystal structures are oriented at high levels, thereby providing improved mechanical strength, especially improved impact strength, and dramatically improving optical properties such as transparency and film appearance.

However, the tenter frame process is greatly affected by the molecular structure of raw materials during film processing and the stretching process conditions are very strict. In general, polyethylene (PE) has a narrow stretching temperature range and very low stretching rate due to the high crystallization rate and excellent crystallinity thereof and a polyethylene (PE) film is broken during stretching when it wrinkles or has a non-uniform thickness during stretching. In particular, a BOPE film produced from high-density polyethylene (HDPE) exhibits high heat resistance and dramatically improved modulus, but is disadvantageously difficult to stretch and has low transparency compared to a BOPE film produced from linear low-density polyethylene (LLDPE).

Therefore, there is a need for a high-density polyethylene film appliable to a recyclable single-material flexible packaging film that has excellent mechanical properties, especially, high modulus, and superior transparency, and is easy to biaxially stretch through a tenter frame process.

The information disclosed in this section is provided only for enhancement of understanding of the background of the present disclosure and therefore it may contain information that does not form the prior art.

### [Prior Art]

### [Patent Literature]

Korean Patent Laid-open No. 10-2016-0114603

### SUMMARY

Embodiments of the present disclosure provide a high-density polyethylene film that is easy to biaxially stretch, has excellent thickness uniformity when stretched and has excellent mechanical properties, especially modulus and transparency.

It should be noted that objects of the present disclosure are not limited to the object as mentioned above, and other unmentioned objects of the present disclosure will be clearly understood by those skilled in the art from the following description.

A high-density polyethylene film according to an embodiment of the present disclosure includes an intermediate layer containing a first high-density polyethylene resin, and a first skin layer and a second skin layer respectively disposed on both surfaces of the intermediate layer, the first skin layer and the second skin layer containing a second high-density polyethylene resin, wherein a density of the first high-density polyethylene resin is higher than a density of the second high-density polyethylene resin, and based on a result of crystallization analysis fractionation of a polymer solution of the second high-density polyethylene resin dissolved in a solvent, a concentration of a polymer dissolved in the polymer solution at a temperature of 80°C to 90°C is decreased by 30% to 75%, compared to a concentration of the polymer dissolved in the polymer solution at a temperature of 100°C.

Each of the intermediate layer, the first skin layer, and the second skin layer may have a single-layer structure or a multilayer structure including two to five layers.

The density of the first high-density polyethylene resin may be 0.945 g/cm³ to 0.970 g/cm³.

The first high-density polyethylene resin may have a ratio of 18% to 28% of an integral value of a graph region corresponding to a polymer having a molecular weight of 10⁵ g/mol to 10⁶ g/mol, based on a total integral value of a molecular weight distribution graph of the first high-density polyethylene resin, and the number of short chain branches of the polymer may be 5 to 15 per 1,000 carbons.

The first high-density polyethylene resin may have a ratio of 20% to 30% of an integral value of a graph region corresponding to a polymer having a molecular weight of 10³ g/mol to 10⁴ g/mol, based on a total integral value of a molecular weight distribution graph of the first high-density polyethylene resin and the number of short chain branches of the polymer may be 1 to 8 per 1,000 carbons.

At least one of the first high-density polyethylene resin or the second high-density polyethylene resin may have a short chain branch and the short chain branch has a broad orthogonal comonomer distribution (BOCD) structure.

Based on a result of crystallization analysis fractionation of a polymer solution of the first high-density polyethylene resin dissolved in a solvent, a concentration of a polymer dissolved in the polymer solution at a temperature of 70°C to 80°C may be decreased by 10% to 20%, compared to a concentration of the polymer dissolved in the polymer solution at a temperature of 100°C.

Based on the result of crystallization analysis fractionation of a polymer solution of the first high-density polyethylene resin dissolved in a solvent, a concentration of the polymer dissolved in the polymer solution at a temperature of 80°C to 90°C may be decreased by 50% to 70% compared to a concentration of the polymer dissolved in the polymer solution at a temperature of 100°C.

The first high-density polyethylene resin may have a melt index (MI2 (2.16 kg load, 190°C) of 0.40 g/10 min to 3.0 g/10 min.

The first high-density polyethylene resin may have a melt flow rate ratio (MI21.6 (21.6 kg load, 190°C)/MI2 (2.16 kg load, 190°C), MFRR) of 70 or more.

Based on the result of crystallization analysis fractionation of a polymer solution of the second high-density polyethylene resin dissolved in a solvent, a concentration of the polymer dissolved in the polymer solution at a temperature higher than 30°C and not higher than 50°C may be decreased by 10% to 20% compared to a concentration of the polymer dissolved in the polymer solution at a temperature of 100°C.

Based on the result of crystallization analysis fractionation of a polymer solution of the second high-density polyethylene resin dissolved in a solvent, a concentration of the polymer dissolved in the polymer solution at a temperature of higher than 30°C and not higher than 60°C may be decreased by 15% to 25% compared to a concentration of the polymer dissolved in the polymer solution at a temperature of 100°C.

The second high-density polyethylene resin may have a ratio of 18% to 30% of an integral value of a graph region corresponding to a polymer having a molecular weight of 10³ g/mol to 10⁴ g/mol, based on a total integral value of a molecular weight distribution graph of the second high-density polyethylene resin and the number of short chain branches of the polymer may be 0.1 to 8 per 1,000 carbons.

The second high-density polyethylene resin may have a density of 0.940 g/cm³ to 0.965 g/cm³.

The second high-density polyethylene resin may have a melt index (MI2 (2.16 kg load, 190°C) of 0.50 g/10 min to 5.0 g/10 min.

The second high-density polyethylene resin may have a melt flow rate ratio (MI21.6 (21.6 kg load, 190°C)/MI2 (2.16 kg load, 190°C), MFRR) of 60 or more.

The high-density polyethylene film may be sequentially biaxially stretched at a stretching rate of 4 to 7 times in a machine direction (MD) and at a stretching rate of 8 to 10 times in a transverse direction (TD) by a tenter frame process.

The high-density polyethylene film may have a thickness of 15 µm to 70 µm, and the intermediate layer may be present at 70% by weight to 98% by weight, based on a total amount of the high-density polyethylene film.

A flexible packaging film according to another embodiment of the present disclosure includes the high-density polyethylene film high-density polyethylene film.

### BRIEF DESCRIPTION OF THE DRAWINGS

The accompanying drawings, which are incorporated herein, illustrate preferred embodiments and serve to further illustrate the technical ideas of the present disclosure in conjunction with the detailed description of exemplary embodiments that follows, and the present disclosure is not to be construed as limited to what is shown in such drawings. In the drawings:
Figure 1 (FIG. 1) is a schematic diagram illustrating a high-density polyethylene film according to one embodiment;
Figure 2 (FIG. 2) is a schematic diagram illustrating a high-density polyethylene film according to one embodiment;
Figure 3 (FIG. 3) is a graph showing the total molecular weight distribution and the number of short chain branches per 1,000 carbons of first high-density polyethylene resins according to Preparation Examples 1-1 and 1-2 measured by gel permeation chromatography-infrared (GPC-IR);
Figure 4 (FIG. 4) is a crystallization analysis fractionation (CRYSTAF) graph showing the first high-density polyethylene resins according to Preparation Examples 1-1 and 1-2; and
Figure 5 (FIG. 5) is a crystallization analysis fractionation (CRYSTAF) graph showing the second high-density polyethylene resins according to Preparation Examples 2-1 and 2-2.

### DETAILED DESCRIPTION OF EXEMPLARY EMBODIMENTS

The objects described above, as well as other objects, features and advantages, will be clearly understood from the following preferred embodiments with reference to the attached drawings. However, the present disclosure is not limited to the embodiments and may be embodied in different forms. The embodiments are suggested only to offer a thorough and complete understanding of the disclosed contents and to sufficiently inform those skilled in the art of the technical concept of the present disclosure and the present disclosure is defined only by the scope of claims.

The terms used herein are provided only to illustrate the exemplary embodiments and should not be construed as limiting the scope of the disclosure. Singular forms are intended to include plural forms as well, unless the context clearly indicates otherwise. It will be further understood that the terms "comprises" and/or "comprising" used herein do not preclude the presence or addition of one or more other components in addition to the mentioned components. Like reference numbers refer to like elements throughout the description of the figures. As used herein, the term "and/or" includes any one of the enumerated items and any combination of one or more thereof. It will be understood that, although the terms "first", "second", etc. may be used herein to describe various elements, these elements should not be construed as being limited by these terms, which are used only to distinguish one element from another. For example, within the scope defined by the present disclosure, a first element may be referred to as a second element.

Unless defined otherwise, all terms used herein (including technical or scientific terms) have the same meanings as generally understood by those skilled in the art to which the present disclosure pertains. In addition, terms identical to those defined in generally used dictionaries should be interpreted as having meanings identical to contextual meanings of the related art, and are not interpreted as having ideal or excessively formal meanings unless they are definitely defined in the present disclosure.

Hereinafter, embodiments of the present disclosure will be described in detail with reference to the attached drawings.

Prior to the description, the meanings of terms used herein will be briefly described. However, the explanation of terms is provided for better understanding of the present disclosure and the terms should not be construed as limiting the technical idea of the present disclosure unless the context clearly indicates the terms are used to limit the scope of the present disclosure.

A high-density polyethylene film according to an embodiment of the present disclosure includes an intermediate layer containing a first high-density polyethylene resin, and a first skin layer and a second skin layer respectively disposed on both surfaces of the intermediate layer, and containing a second high-density polyethylene resin.

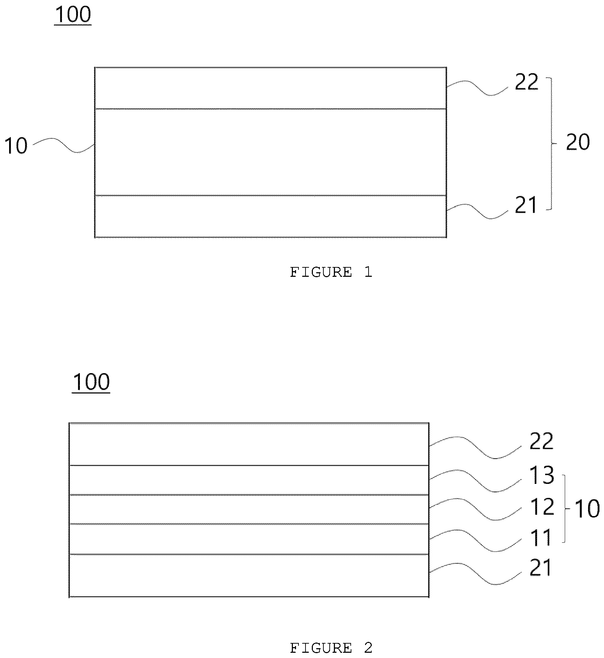

FIG. 1 is a schematic diagram illustrating a high-density polyethylene film according to one embodiment. Referring to FIG. 1, the high-density polyethylene film 100 includes an intermediate layer 10 and a skin layer 20 formed on each of both surfaces of the intermediate layer 10. More specifically, a first skin layer 21 and a second skin layer 22 are disposed on both surfaces of the intermediate layer 10.

In one embodiment, each of the intermediate layer, the first skin layer, and the second skin layer in the high-density polyethylene film may have a single-layer structure or a multilayer structure including two to five layers. For example, the first skin layer and the second skin layer may have a single-layer structure and the intermediate layer may have a multilayer structure including two to four layers. Such a high-density polyethylene film with a multilayer structure enables selection of high-density polyethylene suitable for the functional requirements therefor, diversifies the change in physical properties depending on the layer composition thereof, and provides superior thickness distribution uniformity of each layer.

FIG. 2 is a schematic diagram illustrating a high-density polyethylene film according to one embodiment. Referring to FIG. 2, the high-density polyethylene film 100 has a configuration in which the first skin layer 21 and the second skin layer 22 have a single-layer structure, and the intermediate layer 10 has a multilayer structure including a first intermediate layer 11, a second intermediate layer 10, and a third intermediate layer 12.

The high-density polyethylene film may be a film sequentially biaxially stretched at a machine direction (MD) stretching ratio of 4 to 7 times and a transverse direction (TD) stretching ratio of 8 to 10 times by a tenter frame process. By adjusting the stretching ratios in the machine direction (MD) and the transverse direction (TD) within the ranges, the desired effect of improving physical properties is obtained due to the sufficient orientation of the crystals but it is difficult to secure stretching ratios higher than the predetermined ratios due to equipment limitations.

The high-density polyethylene film may have a thickness of 15 µm to 70 µm, 20 µm to 50 µm. When the thickness of the high-density polyethylene film is controlled within the above range, excellent mechanical properties can be obtained without causing the problem of difficulty in obtaining a thin final film due to an excessively great thickness of the film.

The intermediate layer may be present in an amount of 70% to 98% by weight, 80% to 95% by weight, or 85% to 95% by weight, based on the total amount of the high-density polyethylene film. In addition, a total amount of the first skin layer and the second skin layer may be 2% to 30% by weight, 5% to 20% by weight, or 5% to 15% by weight, based on the total amount of the high-density polyethylene film. By adjusting the thickness of the intermediate layer, the first skin layer, and the second skin layer within the above range, the thickness uniformity of the high-density polyethylene film can be further improved, mechanical properties can be secured, and transparency can be improved.

In one embodiment, a first high-density polyethylene resin may be used alone as a resin for forming the intermediate layer of the high-density polyethylene film.

The density of the first high-density polyethylene resin may be higher than the density of the second high-density polyethylene resin. The density of the first high-density polyethylene resin may, for example, be 0.945 g/cm³ to 0.970 g/cm³ or 0.945 g/cm³ to 0.965 g/cm³. When the density of the first high-density polyethylene resin falls within the range defined above, the heat stability of the final high-density polyethylene film may be excellent, the heat shrinkage rate may be low, and the modulus may be improved.

The first high-density polyethylene resin has a ratio of 18% to 28% of an integral value of a graph region corresponding to a polymer having a molecular weight of 10⁵ g/mol to 10⁶ g/mol based on the total integral value of the molecular weight distribution graph of the first high-density polyethylene resin and the number of short chain branches of the polymer may be 5 to 15 per 1,000 carbons. For example, the first high-density polyethylene resin has a ratio of 20% to 23% of an integral value of a graph region corresponding to a polymer having a molecular weight of 10⁵ g/mol to 10⁶ g/mol based on the total integral value of the molecular weight distribution graph of the first high-density polyethylene resin and the number of short chain branches of the polymer may be 6 to 12 per 1,000 carbons. When the ratio of polymer having a molecular weight of 10⁵ g/mol to 10⁶ g/mol, and the number of single chain branches fall within the range defined above, it is possible to stably sequentially biaxially stretch the film in the machine and transverse directions and to remarkably improve the final physical properties of the film. In the present disclosure, the molecular weight distribution graph may be measured by infrared gel permeation chromatography.

The first high-density polyethylene resin has a ratio of 20% to 30% of an integral value of a graph region corresponding to a polymer having a molecular weight of 10³ g/mol to 10⁴ g/mol based on the total integral value of the molecular weight distribution graph of the first high-density polyethylene resin and the number of short chain branches of the polymer may be 1 to 8 per 1,000 carbons. For example, the first high-density polyethylene resin has a ratio of 22% to 26% of an integral value of a graph region corresponding to a polymer having a molecular weight of 10³ g/mol to 10⁴ g/mol based on the total integral value of the molecular weight distribution graph of the first high-density polyethylene resin and the number of short chain branches of the polymer may be 1.5 to 6 per 1,000 carbons. When the number of single chain branches falls within the range defined above, it is possible to improve the stretching ratio in machine and transverse directions and to secure the thickness uniformity of the film.

The first high-density polyethylene may have a single chain branch and the single chain branch may have a BOCD (broad orthogonal comonomer distribution) structure. The BOCD structure contains large amounts of monomers, has a wide molecular weight distribution, and has a single chain branch that increases as the molecular weight increases. When the molecular weight and the number of short chain branches of the polymer for forming a resin of the first high-density polyethylene fall within the range defined above and the single chain branch has a BOCD profile, if the polyethylene film produced from the first high-density polyethylene resin is sequentially biaxially stretched by the tent frame process, it is possible to stably sequentially biaxially stretch the film in the machine and transverse directions, to secure a uniform thickness, improve the stretching ratio, and to remarkably improve the mechanical strength, especially the modulus, of the stretched film.

Based on the result of crystallization analysis fractionation of a polymer solution of the first high-density polyethylene resin dissolved in a solvent, a concentration of the polymer dissolved in the polymer solution at a temperature of 70°C to 80°C is decreased by 10% to 20%, 12% to 18% or 14% to 17%, compared to a concentration of the polymer dissolved in the polymer solution at a temperature of 100°C. Within the above range, the stretching in machine and transverse directions may be increased and the modulus may be improved in the sequential biaxial stretching process of the final high-density polyethylene film using the tenter frame process. During the crystallization analysis fractionation, as the temperature decreases, the polymer is eluted from the polymer solution, which reduces the concentration of the polymer dissolved in the polymer solution. Therefore, the rate of decrease in the concentration of the polymer dissolved in the polymer solution may mean the fraction in which the polymer is eluted.

In the present invention, in terms of measurement of the polymer concentration decrease from the results of crystallization analysis fractionation, the polymer means the first high-density polyethylene resin or the second high-density polyethylene resin dissolved in the solvent. The physical properties of polyethylene are greatly affected not only by the content of the comonomer but also by the distribution of the comonomer in the polyethylene main chain. Here, crystallization analysis fractionation is a method of measuring the distribution of the intermolecular comonomer of polyethylene.

Based on the result of crystallization analysis fractionation of a polymer solution of the first high-density polyethylene resin dissolved in a solvent, a concentration of the polymer dissolved in the polymer solution at a temperature of 80°C to 90°C is decreased by 50% to 70%, 55% to 68%, or 60% to 65%, compared to a concentration of the polymer dissolved in the polymer solution at a temperature of 100°C. Within the above range, the stretching in machine and transverse directions may be increased and the modulus may be improved in the sequential biaxial stretching process of the final high-density polyethylene film using the tenter frame process.

The first high-density polyethylene resin may have a melt index (MI2 (2.16 kg load, 190°C)) of 0.40 g/10 min to 3.0 g/10 min or 0.45 g/10 min to 1.5 g/10 min. When the melt index of the first high-density polyethylene resin falls within the range defined above, it is possible to obtain excellent extrusion processability and to prevent deterioration of physical properties due to the low molecular weight.

The melt flow rate ratio (MI21.6 (21.6 kg load, 190°C)/MI2 (2.16 kg load, 190°C), MFRR) of the first high-density polyethylene resin may be 70 or more, 80 or more, or 80 to 90. When the melt flow rate ratio of the first high-density polyethylene resin falls within the range defined above, it is possible to obtain excellent final extrusion processability, to stably biaxially stretch the film in the machine direction (MD) and the transverse direction (TD), and allow the film to stretch to a uniform thickness.

The melting temperature Tm of the first high-density polyethylene resin may be 120°C to 145°C, 125°C to 140°C, or 128°C to 135°C. When the melting temperature of the first high-density polyethylene resin falls within the range, it is possible to impart excellent heat resistance and high modulus to the final high-density polyethylene film.

The crystallization temperature Tc of the first high-density polyethylene resin may be 105°C to 130°C, 110°C to 130°C or 115°C to 125°C. When the crystallization temperature of the first high-density polyethylene resin falls within the range, the temperature range enabling the final high-density polyethylene film to be stretched may be widened.

The first high-density polyethylene resin may be obtained by polymerizing an ethylene monomer, a comonomer and hydrogen in the presence of a catalyst. The first high-density polyethylene resin may be formed by polymerization using a two-stage reactor including a first reactor and a second reactor connected to each other. Specifically, an ethylene monomer is polymerized in the first reactor to form a polyethylene resin as a primary intermediate polymer, and the polyethylene resin is transferred to the second reactor and then further polymerized therein to obtain a first high-density polyethylene resin as a final polymer. The first reactor and the second reactor may be based on a slurry process.

The polymerization in the first reactor and the second reactor may be performed in the presence of a Ziegler-Natta (Zn) catalyst. The Ziegler-Natta (Zn) catalyst is a catalyst known as an ordinary Ziegler-Natta catalyst, a compound of a transition metal that belongs to Group IV, V, or VI on Periodic Table is used as a main catalyst, and the most commonly used Ziegler-Natta (Zn) catalyst is a halogenated complex containing magnesium and titanium, or magnesium and vanadium.

In addition, during polymerization in one or more of the first reactor and the second reactor, the comonomer in addition to the ethylene monomer may be fed thereto. The comonomer may be C3 to C20 α-olefin, for example, C4 to C8, or C6 to C8 α-olefin. As a specific example, the comonomer may include at least one of 1-butene, 1-hexene, or 1-octene.

A ratio of the ethylene monomer to the comonomer in the first reactor may be 50 g/kg to 90 g/kg, 60 g/kg to 80 g/kg, or 65 g/kg to 80 g/kg. When the comonomer is fed to the first reactor at a feed ratio within the range, it is possible to prevent plugging and fouling in the reactor, increase the stretching ratio in the machine direction (MD) and the transverse direction (TD) during the biaxial stretching of the final film, and obtain a polymer polyethylene film with high mechanical strength.

A ratio of the ethylene monomer to the hydrogen in the first reactor may be 20 mg/kg to 70 mg/kg, 25 mg/kg to 55 mg/kg, or 35 mg/kg to 50 mg/kg. When the hydrogen is fed to the first reactor at a feed ratio within the range, it is possible to prevent plugging and fouling of the reactor, increase the stretching ratio in the machine direction (MD) and the transverse direction (TD) during the biaxial stretching of the final film, and obtain a polymer polyethylene film with high mechanical strength.

The comonomer may not be fed to the second reactor. Since the comonomer is not fed to the second reactor, it is possible to obtain excellent production stability.

A ratio of the ethylene monomer to the hydrogen in the second reactor may be 0.1 g/kg to 2 g/kg, 0.1 g/kg to 1.5 g/kg, or 0.5 g/kg to 0.8 g/kg. When the hydrogen is fed to the second reactor at a feed ratio within the range, it is possible to prevent plugging and fouling of the reactor, increase the stretching ratio in the machine direction (MD) and the transverse direction (TD) during the biaxial stretching of the final film, and obtain a polymer polyethylene film with high mechanical strength.

In one embodiment, a second high-density polyethylene resin may be used alone as a resin for forming the first skin layer and the second skin layer of the high-density polyethylene film.

The second high-density polyethylene resin used to form the first skin layer and the second skin layer may be prepared by mixing the prepared first high-density polyethylene with 5% to 25% or 10% to 15% by weight of a commercially available polyolefin elastomer (POE).

The results of fractional crystallization analysis of the polymer solution of the second high-density polyethylene resin dissolved in the solvent show that the concentration of the polymer dissolved in the polymer solution at a temperature higher than 30°C and not higher than 50°C may be decreased by 10% to 20%, 12% to 18%, or 15% to 17%, compared to the concentration of the polymer dissolved in the polymer solution at a temperature of 100°C. When the concentration decrease proportion of the second high-density polyethylene resin falls within the range, the biaxial stretching of the final film using the tent frame process increases the stretching ratio in the machine direction (MD) and the transverse direction (TD), and imparts excellent transparency, and thus low haze and high clarity to the final film.

The results of fractional crystallization analysis of the polymer solution of the second high-density polyethylene resin dissolved in the solvent show that the concentration of the polymer dissolved in the polymer solution at a temperature higher than 30°C and not higher than 60°C may be decreased by 15% to 25%, or 18% to 25%, compared to the concentration of the polymer dissolved in the polymer solution at a temperature of 100°C. When the concentration decrease proportion of the second high-density polyethylene resin falls within the range, the biaxial stretching of the final film using the tent frame process increases the stretching rate in the machine direction (MD) and the transverse direction (TD), and imparts excellent transparency, and thus low haze and high clarity to the final film.

The results of fractional crystallization analysis of the polymer solution of the second high-density polyethylene resin dissolved in the solvent show that the concentration of the polymer dissolved in the polymer solution at a temperature of 80°C to 90°C may be decreased by 30% to 75%, 40% to 70% or 50% to 60%, compared to the concentration of the polymer dissolved in the polymer solution at a temperature of 100°C. When the concentration decrease proportion of the second high-density polyethylene resin falls within the range, the biaxial stretching of the final film using the tent frame process increases the stretching rate in the machine direction (MD) and the transverse direction (TD), and imparts excellent transparency, and thus low haze and high clarity to the final film.

The second high-density polyethylene resin has a ratio of 18% to 30% of an integral value of a graph region corresponding to a polymer having a molecular weight of 10³ g/mol to 10⁴ g/mol based on the total integral value of the molecular weight distribution graph of the second high-density polyethylene resin and the number of short chain branches of the polymer may be 0.1 to 8 per 1,000 carbons.

For example, the second high-density polyethylene resin has a ratio of 20% to 25% of an integral value of a graph region corresponding to a polymer having a molecular weight of 10³ g/mol to 10⁴ g/mol based on the total integral value of the molecular weight distribution graph of the second high-density polyethylene resin and the number of short chain branches of the polymer may be 0.5 to 5 per 1,000 carbons. When the ratio of polymer having a molecular weight of 10³ g/mol to 10⁴ g/mol and the number of single chain branches fall within the range defined above, the stretching ratio in the machine and transverse directions may be improved and the thickness uniformity of the film may be secured.

The second high-density polyethylene resin has a ratio of 20% to 26% of an integral value of a graph region corresponding to a polymer having a molecular weight of 10⁵ g/mol to 10⁶ g/mol based on the total integral value of the molecular weight distribution graph of the second high-density polyethylene resin and the number of short chain branches of the polymer may be 1 to 12 per 1,000 carbons.

For example, the second high-density polyethylene resin has a ratio of 21% to 24% of an integral value of a graph region corresponding to a polymer having a molecular weight of 10⁵ g/mol to 10⁶ g/mol based on the total integral value of the molecular weight distribution graph of the second high-density polyethylene resin and the number of short chain branches of the polymer may be 1.5 to 10 per 1,000 carbons. When the ratio of polymer having a molecular weight of 10⁵ g/mol to 10⁶ g/mol and the number of single chain branches fall within the range defined above, it is possible to stably sequentially biaxially stretch the film in the machine and transverse directions, and remarkably improve the final physical properties of the film.

The density of the second high-density polyethylene resin may be lower than the density of the first high-density polyethylene resin. The density of the second high-density polyethylene resin may be, for example, 0.940 g/cm³ to 0.965 g/cm³ or 0.942 g/cm³ to 0.960 g/cm³. When the density of the second high-density polyethylene resin falls within the range, transparency of the final high-density polyethylene film may be improved.

The melt index (MI2 (2.16 kg load, 190°C)) of the second high-density polyethylene resin may be 0.50 g/10 min to 5.0 g/10 min or 1.0 g/10 min to 3.0 g/10 min. When the melt index of the second high-density polyethylene resin falls within the range defined above, extrusion processability may be excellent, the roughness of the film surface may be reduced and the transparency of the film may be improved.

The melt flow rate ratio (MI21.6 (21.6 kg load, 190°C)/MI2 (2.16 kg load, 190°C), MFRR) of the second high-density polyethylene resin may be 60 or more, 70 or more, or 70 to 80. When the melt flow rate ratio of the second high-density polyethylene resin falls within the range defined above, final extrusion processability may be excellent, the film may be steadily biaxially stretched in the machine direction (MD) and the transverse direction (TD), and the film may be stretched to a uniform thickness.

The high-density polyethylene resin according to one embodiment, that is, each of the first high-density polyethylene resin and the second high-density polyethylene, may be mixed with an additive including an antioxidant, a neutralizer, or a combination thereof, to form a composition.

The additive may be present in an amount of 0.005 to 0.5 parts by weight based on 100 parts by weight of the high-density polyethylene resin.

The antioxidant may include at least one selected from the group consisting of a phenol-based compound and a phosphorus-based compound. The phenol-based compound includes pentaerythritol tetrakis(3-(3,5-ditetrabutyl-4-hydroxyphenyl)propionate), octadecyl(3-(3,5-ditetrabutyl-4-hydroxyphenyl)propionate), tris(3,4-ditetrabutyl-4-hydroxylbenzyl)isocyanate, triethylene glycol-bis(3-(tetrabutyl-4-hydroxy-5-methylphenyl)propionate) and the like, and the phosphorus-based compound includes tris(2,4-ditetrabutylphenyl)phosphite, tetrakis(2,4-ditertibutylphenyl)-4,4-diphenyl diphosphonate, distearyl pentaerythritol diphosphite, 2,4-dinonylphenyl di(4-monononylphenyl)phosphite, and the like.

The antioxidant may be present in an amount of 0.01 to 0.5 parts by weight, for example, 0.1 to 0.3 parts by weight, based on 100 parts by weight of the high-density polyethylene resin. When the antioxidant is present in an amount within the range defined above, excellent processability can be obtained without discoloration or change in viscosity.

The neutralizer may include calcium stearate, zinc stearate, magnesium aluminum hydroxycarbonate, zinc oxide, magnesium hydroxystearate or the like.

The neutralizer may be present in an amount of 0.005 to 0.3 parts by weight, for example, 0.02 to 0.1 parts by weight, based on 100 parts by weight of the high-density polyethylene resin. When the neutralizer is present within the range defined above, excellent processability can be obtained without discoloration or change in viscosity.

According to one embodiment, provided is a flexible packaging film including the high-density polyethylene film.

Recently, regulations on recycling have been strengthened all around the world and companies are also making efforts to design flexible packaging materials capable of being easily collected, classified, and recycled due to the change in awareness of social responsibility for inherent sustainability and solutions to a wide range of environmental problems.

The most effective approach to easily collect, classify and recycle flexible packaging materials is to use packaging materials produced from a single material instead of conventional packaging produced from a mixture of a variety of materials.

For this purpose, the use of a biaxially oriented polyethylene (BOPE) film is required. Generally, when a tenter frame process is used as a process for preparing the biaxially oriented polyethylene (BOPE) film and the film is stretched in a machine direction (MD) and a transverse direction (TD), polyethylene chains and crystal structures are oriented at high levels, thereby improving mechanical strength, especially impact strength, and dramatically improving optical properties such as transparency and film appearance.

However, the tenter frame process is greatly affected by the molecular structure of raw materials during film processing and the stretching process conditions are very strict. In general, polyethylene (PE) has a narrow stretching temperature range and very low stretching rate due to the high crystallization rate and excellent crystallinity thereof and a polyethylene (PE) film may be broken during stretching when it wrinkles or has a non-uniform thickness occur during stretching. In particular, a BOPE film produced from high-density polyethylene (HDPE) exhibits high heat resistance and dramatically improved modulus, but is difficult to stretch and has a problem of decreased transparency compared to a BOPE film produced from linear low-density polyethylene (LLDPE).

Therefore, there is a need for a high-density polyethylene film appliable to a recyclable single-material flexible packaging film that has excellent mechanical properties, especially, high modulus, and superior transparency, and is easy to biaxially stretch through a tenter frame process.

Hereinafter, specific examples of the present disclosure will be described. These examples are only provided to exemplify or illustrate the present disclosure in detail and should not be construed as limiting the scope of the present disclosure. In addition, other details that may be sufficiently technically conceived by those skilled in the art will be not described.

### [Preparation of high-density polyethylene resin]

### Preparation Examples 1-1 and 1-2: Preparation of first high-density polyethylene resin composition

### 1. Preparation of first high-density polyethylene resin

A first high-density polyethylene resin was prepared under the conditions in Table 1 below.

Two 90L reactors were connected in series and ethylene polymerization was performed with an ethylene monomer and a comonomer in the presence of a Ziegler-Natta catalyst. The Ziegler-Natta catalyst used herein was a known catalyst containing magnesium and titanium and prepared by an ordinary method.

Specifically, ethylene polymerization was performed with an ethylene monomer (C₂), 1-hexene (C6) as a comonomer, and hydrogen (H₂) in the first reactor. A polymerization ratio, a feed ratio of C₂ to C6, a feed ratio of C₂ to H₂, a polymerization temperature, and a polymerization pressure in the first reactor are shown in Table 1 below, and a residence time was 61 minutes. The intermediate polymer as the slurry phase polymerized in the first reactor was transferred to the second reactor and then further polymerized to obtain a final polymer as the slurry phase. Then, a powdery high-density polyethylene resin was prepared from the final polymer as the slurry phase. Ethylene polymerization was performed with the ethylene monomer (C₂) and hydrogen (H₂) without the comonomer (C6) in the second reactor. A polymerization ratio, a feed ratio of C₂ to C6, a feed ratio of C₂ to H₂, a polymerization temperature, and a polymerization pressure in the second reactor are shown in Table 1 below, and a residence time was 34 minutes.

**[Table 1]**

| | | | Preparation Example 1-1 | Preparation Example 1-2 |
|---|---|---|---|---|
| Catalyst system | | | ZN | ZN |
| Comonomer | | | 1-hexene | 1-hexene |
| First reactor | C6 feed ratio | g/kg_C₂ | 68 | 75 |
| | H₂ feed ratio | mg/kg_C₂ | 38 | 47 |
| | Polymerization ratio | wt% | 47 | 48 |
| | Temperature | °C | 86 | 86 |
| | Pressure | kgf/cm² | 45 | 45 |
| Second reactor | C6 feed ratio | g/kg_C₂ | - | - |
| | H₂ feed ratio | g/kg_C₂ | 0.6 | 0.64 |
| | Polymerization ratio | wt% | 53 | 52 |
| | Temperature | °C | 91 | 91 |
| | Pressure | kgf/cm² | 45 | 45 |

### 2. Preparation of first high-density polyethylene resin composition

100 parts by weight of each first high-density polyethylene resin was mixed with 0.1 part by weight of Irganox-3114 and 0.1 part by weight of Irgafos-168 as antioxidants, and 0.025 parts by weight of magnesium aluminum hydroxycarbonate (DHT-4A) as a neutralizer using a Henschel mixer and then a first high-density polyethylene resin composition was prepared in the form of pellets using a twin-screw extruder.

### Preparation Examples 2-1 and 2-2: Preparation of second high-density polyethylene resin composition

A second high-density polyethylene resin composition was prepared under the conditions in Table 2 below.

100 parts by weight of a mixture of the first high-density polyethylene resin prepared in Preparation Example 1-1 or 1-2, and Commercial POE Supreme 004 or Supreme 883 produced by SK Geocentric was mixed with 0.1 part by weight of Irganox-3114 and 0.1 part by weight of Irgafos-168 as antioxidants, and 0.025 parts by weight of magnesium aluminum hydroxycarbonate (DHT-4A) as a neutralizer using a Henschel mixer and then a second high-density polyethylene resin composition was prepared in the form of pellets using a twin-screw extruder.

**[Table 2]**

| | Preparation Example 2-1 | Preparation Example 2-2 |
|---|---|---|
| Preparation Example 1-1 (wt%) | 85 | - |
| Preparation Example 1-2 (wt%) | - | 90 |
| SK Supreme 004 (wt%) | 15 | - |
| SK Supreme 883 (wt%) | - | 10 |

### Comparative Preparation Examples 1 to 3: Preparation of second high-density polyethylene resin composition

### 1. Preparation of second high-density polyethylene resin

The second high-density polyethylene resin of Comparative Preparation Example 1 is a C330A product produced through a slurry process from Hanwha Solutions Co., Ltd., and 1-butene was used as the copolymer. The C330A product has a density of 0.958 g/cm³, a melt index (MI2) of 1.0 g/10 min, and a melt flow rate ratio of 150. The term "melt flow rate ratio" herein used refers to a ratio of a melt index (MI21.6) measured at 190°C with a 21.6 kg load in accordance with ASTM D1238 to a melt index (MI2) measured at 190°C with a 2.16 kg load in accordance with ASTM D1238.

The second high-density polyethylene resin of Comparative Preparation Example 2 is a C910C product produced through a gas phase process using a gas phase reactor (GPR) from Hanwha Solutions Co., Ltd., 1-butene was used as the copolymer, and the C910C product has a density of 0.950 g/cm³, a melt index (MI2) of 2.2 g/10 min and a melt flow rate ratio of 30.

The second high-density polyethylene resin of Comparative Preparation Example 3 is a R904U product produced through a gas phase process using a gas phase reactor (GPR) from Hanwha Solutions Co., Ltd., and 1-hexene was used as the copolymer, and the R904U product has a density of 0.940 g/cm³, a melt index (MI2) of 4.0 g/10 min and a melt flow rate ratio of 25.

### 2. Preparation of second high-density polyethylene resin composition

100 parts by weight of each second high-density polyethylene resin was mixed with 0.1 part by weight of Irganox-3114 and 0.1 part by weight of Irgafos-168 as antioxidants, and 0.025 parts by weight of magnesium aluminum hydroxycarbonate (DHT-4A) as a neutralizer using a Henschel mixer and then a second high-density polyethylene resin composition was prepared in the form of pellets using a twin-screw extruder.

### [Production of high-density polyethylene film]

### Examples 1 to 4 and Comparative Examples 1 to 7

A biaxially oriented polyethylene (BOPE) film having a multilayer structure was produced using the high-density polyethylene resin composition prepared in each of Preparation Examples 1-1, 1-2, 2-1, and 2-2 and Comparative Preparation Examples 1 to 3. At this time, the type of high-density polyethylene resin composition used to constitute each layer and the ratio (%) of the total thickness of the film to the thickness of each layer are shown in Table 3 below.

Specifically, the biaxially oriented polyethylene film having a multilayer structure was biaxially stretched in a Bruckner production line (hybrid BOPE/BOPP line, 5-layer, 6.6 m width). The film was applied in 5 layers, and the film was finally stretched 5.2 times in the machine direction (MD) and 9 times in the transverse direction (TD) at an extrusion speed of 190 m/min and a die temperature of 230 to 240°C. Here, the extrusion conditions and film processing conditions of the biaxially stretched film are specifically shown in Table 4 below.

**[Table 3]**

| | First skin layer (A1) | Intermediate layer (B) | Second skin layer (A2) | A1/B/B/B/A2 (wt%) |
|---|---|---|---|---|
| Example 1 | Preparation Example 2-1 | Preparation Example 1-1 | Preparation Example 2-1 | 5/10/70/10/5 |
| Example 2 | Preparation Example 2-2 | Preparation Example 1-1 | Preparation Example 2-2 | 5/10/70/10/5 |
| Example 3 | Preparation Example 2-1 | Preparation Example 1-2 | Preparation Example 2-1 | 5/10/70/10/5 |
| Example 4 | Preparation Example 2-2 | Preparation Example 1-2 | Preparation Example 2-2 | 5/10/70/10/5 |
| Comparative Example 1 | Preparation Example 1-1 | Preparation Example 1-1 | Preparation Example 1-1 | 5/10/70/10/5 |
| Comparative Example 2 | Preparation Example 1-2 | Preparation Example 1-2 | Preparation Example 1-2 | 5/10/70/10/5 |
| Comparative Example 3 | Preparation Example 2-1 | Preparation Example 2-1 | Preparation Example 2-1 | 5/10/70/10/5 |
| Comparative Example 4 | Preparation Example 2-2 | Preparation Example 2-2 | Preparation Example 2-2 | 5/10/70/10/5 |
| Comparative Example 5 | Comparative Preparation Example 1 | Preparation Example 1-1 | Comparative Preparation Example 1 | 5/10/70/10/5 |
| Comparative Example 6 | Comparative Preparation Example 2 | Preparation Example 1-2 | Comparative Preparation Example 2 | 5/10/70/10/5 |
| Comparative Example 7 | Comparative Preparation Example 3 | Preparation Example 1-2 | Comparative Preparation Example 3 | 5/10/70/10/5 |

**[Table 4]**

| | | |
|---|---|---|
| Extrusion system | COEX 1 | 47/175 ∼ 220 °C |
| | COEX 2 | 47/175 ∼ 220 °C |
| | Main EXT | 52/240 ∼ 230 °C |
| | COEX 3 | 47/175 ∼ 220 °C |
| | COEX 4 | 47/175 ∼ 220 °C |
| | Adapter/Die | 230/240 ∼ 240 °C |
| Casting unit | Chill Roll - temp' | 70 °C |
| | Water Bath | 60 °C |
| | Chill Roll - speed | 35 m/min |
| MDO | MDX-stretching | x 5.2 |
| | Line speed (after MD stretching) | 190 m/min |
| MDO temperature | Preheating | 118∼124 °C |
| | Drawing | 120∼121 °C |
| | Annealing | 115 °C |
| TDO temperature | Preheating | 143∼128°C |
| | Drawing | 127 °C |
| | Annealing | 128∼129 °C |
| TDO | TDX-stretching (max) | x 9 |

### [Evaluation of physical properties of high-density polyethylene resin composition]

The physical properties of the first high-density polyethylene resin compositions according to Preparation Examples 1-1 and 1-2 were evaluated, the results are shown in Table 5 below, and the physical properties of the second high-density polyethylene resin compositions according to Preparation Examples 2-1 and 2-2 and Comparative Preparation Examples 1 to 3 were evaluated and the results are shown in Table 6 below. The evaluation method is as follows.

### Density

Measurements were performed in accordance with ASTM D1505.

### Melt index (MI)

The melt index (MI2) was measured at 190°C with a load of 2.16 kg each in accordance with ASTM D1238.

The melt index (MI21.6) was measured at 190°C with a load of 21.6kg in accordance with ASTM D1238.

### Melt Flow Rate Ratio (MFRR)

The melt flow rate ratio (MFRR) refers to a ratio of a melt index (MI21.6) measured at 190°C with a 21.6 kg load in accordance with ASTM D1238 to a melt index (MI2) measured at 190°C with a 2.16 kg load in accordance with ASTM D1238.

### Melting temperature (Tm) and crystallization temperature (Tc)

The temperature was measured at a temperature increase rate of 10°C/min in accordance with ASTM D 3418 using differential scanning calorimetry (DSC).

### Infrared Gel Permeation Chromatography (GPC-IR)

GPC-IR^{®} equipment from Polymer Char was used. 12 mg of a sample was added to 8 ml of 1,2,4-trichlorobenzene (containing 125 ppm of BHT) and dissolved at 160°C for 2 hours. The eluent used herein was 1,2,4-trichlorobenzene (containing 125 ppm BHT), and the columns used herein were one PLgel Olexis guard and three PLgel Olexis. 200 µl was analyzed. Column calibration for molecular weight calculation was performed using a polystyrene standard material and the Mark-Houwink constant (K = 44.6, a = 0.725) was used to calculate the molecular weight of polyethylene.

The number of short chain branches (SCB) in the sample refers to the number of short chain branches per 1,00 carbons and was calibrated using a known standard (1-octene copolymer from polymer Char). The number of short chain branches (SCB) refers to an average of the number of methyl groups (-CH₃) present per 1,000 carbons in the sample excluding the methyl groups at the end of the chain, and means the value calculated through end chain correction from the number of methyl groups present per 1,000 carbons in the sample (CH₃/1000TC). The end chain correction is determined by Equation 1 below.

### [Equation 1]

The number of chain ends per 1,000 carbons (No. of chain ends/1000TC) = (A x 14,000) / M
wherein A means the number of end groups. For example, A for linear polyethylene (linear PE) is 2 and A for long chain branch (LCB) polymers is higher than 2. In addition, M refers to a given molecular mass.

When the chain end group ends with a vinyl group (-CH=CH₂), the value of 0 was applied to the end chain correction.

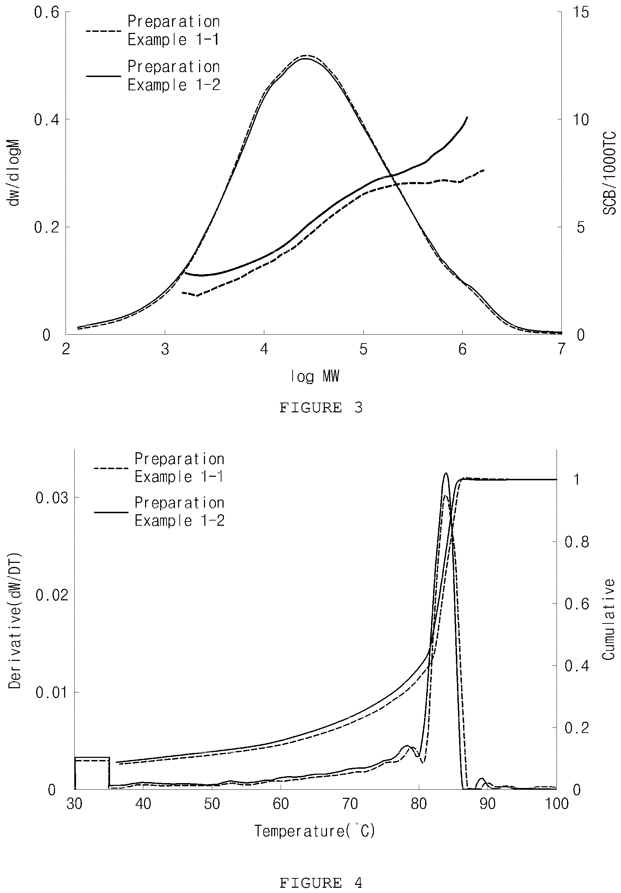

FIG. 3 below is a graph showing the total molecular weight distribution and the number of short chain branches per 1,000 carbons of the first high-density polyethylene resins of Preparation Example 1-1 and Preparation Example 1-2 measured by infrared gel permeation chromatography (GPC-IR). As can be seen from FIG. 3, the integrated values of the regions with logM of 3 to 4 and 5 to 6 in the total molecular weight distribution graph of the first high-density polyethylene correspond to the proportion of the polymer having a molecular weight (M) of 10⁵ g/mol to 10⁶ g/mol and the proportion of the polymer having a molecular weight (M) of 10³ g/mol to 10⁴ g/mol, respectively, in the high-density polyethylene resin according to one embodiment.

Based on this, the proportion of the polymer having a molecular weight of 10⁵ g/mol to 10⁶ g/mol (10⁵ to 10⁶), the proportion of the polymer having a molecular weight of 10³ g/mol to 10⁴ g/mol (10³ to 10⁴), the number of short chain branches of the polymer having a molecular weight of 10⁵ g/mol to 10⁶ g/mol (10⁵ to 10⁶), and the number of short chain branches of the polymer having a molecular weight of 10³ g/mol to 10⁴ g/mol (10³ to 10⁴) were measured.

### Crystallization Analysis Fractionation (CRYSTAF)

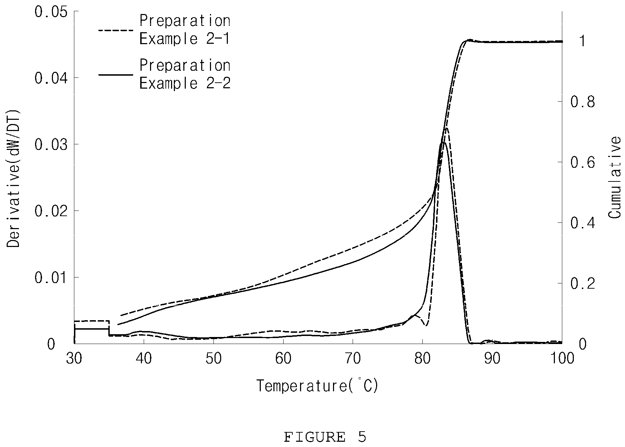

Measurement was performed using CRYSTAF, a Polymer Char equipment. 20 mg of the sample was dissolved in 20 ml of 1,2,4-trichlorobenzene at 160°C for 60 minutes while stirring to prepare a polymer solution. The polymer solution was injected into the equipment and was stabilized at 100°C for 45 minutes, and then the temperature was lowered to 35°C at a constant rate of 0.2°C/min. At this time, the formed crystal was filtered through a filter and the concentration of the polymer dissolved in the solution was measured. The cumulative curve shows a decrease (%) of the polymer concentration dissolved in the polymer solution as a function of temperature, relative to the concentration at an initial set temperature of 100°C, which is 100%. Based on the cumulative curve, the decrease (%) in the concentration of polymer dissolved in the polymer solution was measured at each temperature. The crystallization analysis fractionation graph of the first high-density polyethylene resins according to Preparation Examples 1-1 and 1-2 can be seen from FIG. 4 below and the crystallization analysis fractionation graph of the second high-density polyethylene resins according to Preparation Examples 2-1 and 2-2 can be seen from FIG. 5 below.

**[Table 5]**

| Physical properties | Unit | Preparation Example 1-1 | Preparation Example 1-2 | |
|---|---|---|---|---|
| Density | g/cm³ | 0.952 | 0.951 | |
| Melt index (MI2) | g/10min | 1.04 | 1.51 | |
| Melt flow rate ratio | - | 84 | 82 | |
| DSC | Tm | °C | 130 | 129 |
| | Tc | °C | 118 | 119 |
| Infrared Gel Permeation Chromatography | Polymer proportion (10⁵ to 10⁶) | % | 20.7 | 20.8 |
| | Polymer proportion (10³ to 10⁴) | % | 25.7 | 25.5 |
| | Number of short chain branches (10⁵ to 10⁶) | per 1,000 carbons | 6.5 to 7.2 | 6.8 to 9.6 |
| | Number of short chain branches (10³ to 10⁴) | per 1,000 carbons | 1.8 to 3.2 | 2.7 to 3.5 |
| Crystallizatio n Analysis Fractionation | Concentration decrease (> 30°C, ≤ 70°C) | % | 21.4 | 22.8 |
| | Concentration decrease (70 to 80°C) | % | 15.0 | 15.3 |
| | Concentration decrease (80 to 90°C) | % | 63.3 | 61.7 |
| | Concentration decrease (90 to 100°C) | % | 0.3 | 0.2 |

**[Table 6]**

| Physical properties | | Unit | Prep arat ion Exam ple 2-1 | Prepara tion Example 2-2 | Compara tive Prepara tion Example 1 | Compara tive Prepara tion Example 2 | Compara tive Prepara tion Example 3 |
|---|---|---|---|---|---|---|---|
| Density | | g/cm³ | 0.94 5 | 0.945 | 0.958 | 0.950 | 0.940 |
| Melt index (MI2) | | g/10 min | 1.3 | 1.8 | 1.0 | 2.2 | 4.0 |
| Melt flow rate ratio | | - | 76 | 75 | 150 | 30 | 25 |
| Infrared Gel Permeatio n Chromatog raphy | Polymer proporti on (10⁵ to 10⁶) | % | 22.8 | 22.1 | 27.8 | 19.8 | 25.4 |
| | Polymer proporti on (10³ to 10⁴) | % | 20.8 | 23.2 | 10.5 | 16 | 6.5 |
| | Number of short chain branches (10⁵ to 10⁶) | Per 1,000 carbons | 5.1 to 8.7 | 1.9 to 5.6 | 2.4 to 2.7 | 5.4 to 5.7 | 6.3 to 8.4 |
| | Number of short chain branches (10³ to 10⁴) | Per 1,000 carbons | 0.6 to 2.7 | 1.5 to 4.2 | 0.3 to 0.9 | 1.5 to 3.7 | 6.1 to 6.5 |
| Crystalli zation Analysis Fractiona tion | Concentr ation decrease (> 30°C, ≤ 50°C) | % | 16.1 | 15.6 | 9.2 | 2.0 | 17.3 |
| | Concentr ation decrease (> 30°C, ≤ 60°C) | % | 23.1 | 20.3 | 13.4 | 3.0 | 26.4 |
| | Concentr ation decrease (60 to 70 °C) | % | 8.7 | 6.6 | 8.8 | 2.5 | 15.2 |
| | Concentr ation decrease (70 to 80 °C) | % | 13.6 | 14.0 | 17.8 | 8.0 | 32.2 |
| | Concentr ation decrease (80 to 90 °C) | % | 54.2 | 58.9 | 59.9 | 86.5 | 26.2 |
| | Concentr ation decrease (90 to 100 °C) | % | 0.4 | 0.1 | 0.2 | 0.1 | 0.0 |

### [Evaluation of physical properties of high-density polyethylene film]

The physical properties of the high-density polyethylene films of Examples 1 to 4 and Comparative Examples 1 to 7 were evaluated in accordance with the following method and the results are shown in Table 7 below.

### Tensile strength and modulus

The tensile strength (MPa) and modulus (MPa) of each film were measured in the machine direction (MD) and transverse direction (TD) in accordance with ASTM D 882.

### Haze and clarity

Haze (%) and clarity (%) were measured in accordance with ASTM D 1003.

### Film thickness and standard deviation (2σ)

The thickness of each film was measured approximately 50 times using a non-contact thickness gauge at 20 mm intervals in the machine direction (MD) and the transverse direction (TD), the average thereof was calculated, and 2 sigma (2σ) was calculated and expressed as standard deviation (%).

**[Table 7]**

| | Tensile strength (MPa) | | Modulus (MPa) | | Haze (%) | clarit y (%) | Standard deviation (%) | |
|---|---|---|---|---|---|---|---|---|
| | MD | TD | MD | TD | | | MD | TD |
| Example 1 | 106 | 219 | 1401 | 1897 | 5.4 | 98 | 5 | 11 |
| Example 2 | 104 | 188 | 1480 | 1884 | 5.6 | 98 | 5 | 9 |
| Example 3 | 99 | 219 | 1356 | 1724 | 5.3 | 98 | 5 | 8 |
| Example 4 | 95 | 188 | 1350 | 1701 | 5.1 | 97 | 5 | 7 |
| Comparativ e Example 1 | 116 | 211 | 1418 | 1916 | 36 | 90 | 5 | 9 |
| Comparativ e Example 2 | 101 | 214 | 1364 | 1705 | 27 | 92 | 5 | 8 |
| Comparativ e Example 3 | 105 | 185 | 1150 | 1558 | 4.5 | 98 | 6 | 7 |
| Comparativ e Example 4 | 100 | 210 | 1044 | 1506 | 4.3 | 98 | 5 | 8 |
| Comparativ e Example 5 | 91 | 150 | 1142 | 1331 | 31 | 30 | 14 | 22 |
| Comparativ e Example 6 | 87 | 158 | 990 | 1274 | 30 | 30 | 8 | 13 |
| Comparativ e Example 7 | 86 | 167 | 976 | 1126 | 28 | 33 | 15 | 11 |

As can be seen from Table 7, the biaxially stretched films of Examples 1 to 4 according to the present disclosure using the film including the intermediate layer (B) formed of a composition containing a first high-density polyethylene resin, and the film including the first skin layer (A1) and the second skin layer (A2) formed of a composition containing a second high-density polyethylene resin have excellent properties, i.e., a high modulus, especially an MD modulus of 1,300 MPa or more, a haze of less than 60, a clarity of 97% or more, and high thickness uniformity.

On the other hand, Comparative Examples 1 to 4, in which the first high-density polyethylene resin or the second high-density polyethylene resin is used for all of the intermediate layer, the first skin layer, and the second skin layer, have low haze or modulus. In addition, Comparative Examples 5 to 7, in which the first high-density polyethylene resin according to the present disclosure was used for the intermediate layer, but the second high-density polyethylene resin according to the present disclosure is not used for the first skin layer and the second skin layer, has low haze and modulus.

As is apparent from the above description, the high-density polyethylene film according to the present disclosure can be stretched uniformly and thus ensures thickness uniformity, and exhibits excellent mechanical properties and optical properties, compared to a film including respective layers formed using a combination of various polyethylene resins. In addition, the high-density polyethylene film according to the present disclosure is applicable to a flexible packaging film formed of a single and recyclable material.

The effects of the present disclosure are not limited to those described above, and other unmentioned technical effects will be apparent to those skilled in the art from the above description of exemplary embodiments.

Although the embodiments of the present disclosure have been disclosed with reference to the annexed drawings, those skilled in the art will appreciate that various modifications, additions and substitutions are possible, without departing from the scope and spirit of the disclosure. Thus, it is clear that the above-described exemplary embodiments are illustrative in all aspects and do not limit the present disclosure.

## Claims

1. A high-density polyethylene film comprising:
an intermediate layer comprising a first high-density polyethylene resin; and
a first skin layer and a second skin layer respectively disposed on both surfaces of the intermediate layer, the first skin layer and the second skin layer comprising a second high-density polyethylene resin,
wherein a density of the first high-density polyethylene resin is higher than a density of the second high-density polyethylene resin, and
based on a result of crystallization analysis fractionation of a polymer solution of the second high-density polyethylene resin dissolved in a solvent, a concentration of a polymer dissolved in the polymer solution at a temperature of 80°C to 90°C is decreased by 30% to 75%, compared to a concentration of the polymer dissolved in the polymer solution at a temperature of 100°C.

2. The high-density polyethylene film according to claim 1, wherein each of the intermediate layer, the first skin layer, and the second skin layer has a single-layer structure or a multilayer structure including two to five layers.

3. The high-density polyethylene film according to claim 1, wherein the density of the first high-density polyethylene resin is 0.945 g/cm³ to 0.970 g/cm³, and the second high-density polyethylene resin has a density of 0.940 g/cm³ to 0.965 g/cm³.

4. The high-density polyethylene film according to claim 1, wherein the first high-density polyethylene resin has a ratio of 18% to 28% of an integral value of a graph region corresponding to a polymer having a molecular weight of 10⁵ g/mol to 10⁶ g/mol, based on a total integral value of a molecular weight distribution graph of the first high-density polyethylene resin, and the number of short chain branches of the polymer is 5 to 15 per 1,000 carbons.

5. The high-density polyethylene film according to claim 1, wherein the first high-density polyethylene resin has a ratio of 20% to 30% of an integral value of a graph region corresponding to a polymer having a molecular weight of 10³ g/mol to 10⁴ g/mol, based on a total integral value of a molecular weight distribution graph of the first high-density polyethylene resin and the number of short chain branches of the polymer is 1 to 8 per 1,000 carbons.

6. The high-density polyethylene film according to claim 1, wherein, based on a result of crystallization analysis fractionation of a polymer solution of the first high-density polyethylene resin dissolved in a solvent, a concentration of a polymer dissolved in the polymer solution at a temperature of 70°C to 80°C is decreased by 10% to 20%, compared to a concentration of the polymer dissolved in the polymer solution at a temperature of 100°C.

7. The high-density polyethylene film according to claim 1, wherein, based on the result of crystallization analysis fractionation of a polymer solution of the first high-density polyethylene resin dissolved in a solvent, a concentration of the polymer dissolved in the polymer solution at a temperature of 80°C to 90°C is decreased by 50% to 70% compared to a concentration of the polymer dissolved in the polymer solution at a temperature of 100°C.

8. The high-density polyethylene film according to claim 1, wherein the first high-density polyethylene resin has a melt index (MI2 (2.16 kg load, 190°C) of 0.40 g/10 min to 3.0 g/10 min, and the second high-density polyethylene resin has a melt index (MI2 (2.16 kg load, 190°C) of 0.50 g/10 min to 5.0 g/10 min.

9. The high-density polyethylene film according to claim 1, wherein the first high-density polyethylene resin has a melt flow rate ratio (MI21.6 (21.6 kg load, 190°C)/MI2 (2.16 kg load, 190°C), MFRR) of 70 or more, and the second high-density polyethylene resin has a melt flow rate ratio (MI21.6 (21.6 kg load, 190°C)/MI2 (2.16 kg load, 190°C), MFRR) of 60 or more.

10. The high-density polyethylene film according to claim 1, wherein, based on the result of crystallization analysis fractionation of a polymer solution of the second high-density polyethylene resin dissolved in a solvent, a concentration of the polymer dissolved in the polymer solution at a temperature higher than 30°C and not higher than 50°C is decreased by 10% to 20% compared to a concentration of the polymer dissolved in the polymer solution at a temperature of 100°C.

11. The high-density polyethylene film according to claim 1, wherein, based on the result of crystallization analysis fractionation of a polymer solution of the second high-density polyethylene resin dissolved in a solvent, a concentration of the polymer dissolved in the polymer solution at a temperature of higher than 30°C and not higher than 60°C is decreased by 15% to 25% compared to a concentration of the polymer dissolved in the polymer solution at a temperature of 100°C.

12. The high-density polyethylene film according to claim 1, wherein the second high-density polyethylene resin has a ratio of 18% to 30% of an integral value of a graph region corresponding to a polymer having a molecular weight of 10³ g/mol to 10⁴ g/mol, based on a total integral value of a molecular weight distribution graph of the second high-density polyethylene resin and the number of short chain branches of the polymer is 0.1 to 8 per 1,000 carbons.

13. The high-density polyethylene film according to claim 1, wherein the high-density polyethylene film is sequentially biaxially stretched at a stretching rate of 4 to 7 times in a machine direction (MD) and at a stretching rate of 8 to 10 times in a transverse direction (TD) by a tenter frame process.

14. The high-density polyethylene film according to claim 1, wherein the high-density polyethylene film has a thickness of 15 µm to 70 µm, and the intermediate layer is present at 70% by weight to 98% by weight, based on a total amount of the high-density polyethylene film.

15. A flexible packaging film comprising the high-density polyethylene film according to any one of claims 1 to 14.
